# EUROPÄISCHE PATENTSCHRIFT

(11) **EP 0 658 715 B1**
(45) Veröffentlichungstag und Bekanntmachung des Hinweises auf die Patenterteilung: **04.06.1997**
(21) Anmeldenummer: 94119374.0
(22) Anmeldetag: 08.12.1994
(51) Int. Cl.: F16L 19/12

(54) **Rohrverschraubung in Stossausführung**
Flat-face threaded tube connector
Raccord vissé pour tuyaux à pleine face

(30) Priorität: 16.12.1993 DE 4343005
(43) Veröffentlichungstag der Anmeldung: 21.06.1995
(73) Patentinhaber: Gressel AG, CH-8355 Aadorf (CH)
(72) Erfinder: Wagner, Heinz, CH-8355 Aadorf (CH); Gray, Anthony Gordon, CH-8355 Aadorf (CH)
(74) Vertreter: Liebau, Gerhard, Dipl.-Ing.

(56) Entgegenhaltungen:
- EP-A- 0 133 341
- DE-A- 4 041 679
- US-A- 2 437 632
- US-A- 4 867 489

## Beschreibung

Die Erfindung betrifft eine Rohrverschraubung in Stoßausführung, mit einem eine radial verlaufende Dichtfläche aufweisenden Anschlußstutzen, einer darauf aufschraubbaren Überwurfmutter, und mit einem Klemmring, der an seinem ersten Ende einen die Rohrstirnfläche übergreifenden Bund und eine der Stutzendichtfläche zugekehrte radiale Klemmringdichtfläche aufweist und dessen zweites, eine geringere Wanddicke aufweisendes Ende unter Wirkung der Überwurfmutter an das Rohr anpreßbar ist, wobei zwischen den beiden radialen Dichtflächen eine erste elastische Dichtung aus einem Elastomer und in einer inneren Ringnut des Klemmringes eine an der Rohrmantelfläche anliegende zweite elastische Dichtung aus einem Elastomer vorgesehen ist.

Bei einer derartigen bekannten Rohrverschraubung in Stoßausführung dieser Art (US 4,867,489) ist die erste elastische Dichtung in einer Ringnut angeordnet, die in die Stirnfläche des Anschlußstutzens eingearbeitet ist. Die als O-Ring ausgestaltete Dichtung kann aus der axial offenen Ringnut beim Transport des Anschlußstutzens und bei der Handhabung desselben leicht herausfallen, solange die Rohrverschraubung nicht vollständig montiert ist. Damit der O-Ring tatsächlich abdichtet, muß die Ringnut hierfür mit hoher Präzision hergestellt werden, was auch nur mit einem Sodnerwerkzeug möglich ist. In dem Klemmring ring ist in einer zum Inneren des Klemmringes hin offenen Ringnut eine ebenfalls als O-Ring ausgestaltete zweite Dichtung angeordnet. Dies hat den Nachteil, daß bei der Herstellung der Rohrverschraubung sowohl im Klemmring als auch im Anschlußstutzen jeweils eine Ringnut zur Aufnahme eines O-Ringes eingearbeitet werden muß. Dies ist besonders beim Anschlußstutzen von Nachteil, denn häufig werden derartige Anschlußstutzen nicht vom Hersteller der eigentlichen Rohrverbindung sondern vom Hersteller des Gerätes, an welchem der Anschlußstutzen vorgesehen ist, gefertigt. Nur wenn der Gerätehersteller bereit ist, auch die Ringnut für den O-Ring am Anschlußstutzen vorzusehen, kann dort die gewünschte Weichdichtung zusätzlich zu der metallischen Abdichtung eingesetzt werden. Bereits vorhandene Rohrverschraubungen können nicht ohne weiteres durch die mit zusätzlichen elastischen Dichtungen versehene Rohrverschraubung der eingangs erwähnten Art ausgetauscht werden, es sei denn, man tauscht auch den Anschlußstutzen aus. Bei der bekannten Rohrverschraubung sind außerdem zwischen dem Innern des Rohres und des Anschlußstutzens und den beiden Dichtungen größere Toträume vorhanden, was den Nachteil hat, daß sich in diesen Toträumen Keime festsetzen können, wobei das Rohrleitungssystem infolge dieser Toträume nicht mehr einwandfrei sterilisierbar ist. Ein Hauptnachteil der bekannten Rohrverschraubung besteht jedoch darin, daß sich das Rohr beim Anziehen der Überwurfmutter mitdreht, sofern es nicht mit einer Zange oder einer entsprechenden konstruktiven Ausgestaltung festgehalten wird. Dieses Mitdrehen ist darauf rückzuführen, daß die Reibung zwischen den beiden radialen Dichtflächen von Anschlußstutzen und Klemmring geringer ist als die Reibung zwischen der konischen Bohrung der Überwurfmutter und dem ebenfalls konisch verjüngten Ende des Klemmringes. Infolge dieser größeren Reibung dreht sich der Klemmring zusammen mit der Überwurfmutter. Da hierbei der Anschlußstutzen und zunächst auch das Rohr ruhen, kommt es zu einer Relativverdrehung zwischen den beiden Dichtungen und dem Rohr bzw. dem Klemmring. Dies kann zu einer Beschädigung der Dichtungen führen. Wird die Überwurfmutter noch stärker angezogen, dann dringen Teile des Klemmringes in die Rohrmantelfläche ein, wodurch dann auch das Rohr mitgedreht wird.

Der Erfindung liegt daher die Aufgabe zugrunde, eine Rohrverschraubung in Stoßausführung der eingangs erwähnten Art zu schaffen, die einfacher in der Herstellung ist, bei der ein Verlieren der Dichtungen ausgeschlossen ist, eine noch bessere Abdichtung ohne Toträume gewährleistet und bei der eine Mitdrehung des Klemmringes und des Rohres beim Anziehen der Überwurfmutter ausgeschlossen ist, so daß auch eine Beschädigung der Dichtungen beim Anziehen der Klemmutter vermieden wird.

Dies wird nach der Erfindung dadurch erreicht, daß in der Stirnseite des ersten Klemmringendes radial innerhalb der Klemmringdichtfläche für die erste elastische Dichtung eine ringförmige Vertiefung vorgesehen ist, die sich vom Innenumfang des Bundes radial nach außen erstreckt und unter Belassung eines, die erste Dichtung umschließenden, ringförmigen Dichtrandes mit Abstand vom Außenumfang des Klemmringes endet, daß der ganze zwischen beiden Dichtungen liegende Bereich des Bundes und der Klemmringinnenseite mit einer elastischen Dichtungsschicht ausgekleidet ist, die mit den beiden Dichtungen eine zusammenhängende einstückige Dichtungsanordnung bildet, und daß zwischen dem Klemmring und einem an dem dem Anschlußstutzen abgewandten Ende der Überwurfmutter vorgesehenen, radial nach innen gerichteten Bund ein Druckring mit einem auf das zweite Ende des Klemmringes einwirkenden Innenkonus und einem am Bund der Überwurfmutter anliegenden, radialen Ringabsatz angeordnet ist.

Die Erfindung geht also von dem Gedanken aus, sämtliche zur Aufnahme der aus Elastomer bestehenden elastischen Dichtungsanordnung erforderlichen Ausnehmungen an dem Klemmring vorzusehen und alle Teile der elastischen Dichtung zu einer einstückigen, zusammenhängenden Dichtungsanordnung zusammenzufassen. Durch die Anordnung aller für die Aufnahme der Dichtungsanordnung erforderlicher Ausnehmungen am Klemmring ist eine kostengünstigere Fertigung der Rohrverschraubung möglich, denn der Anschlußstutzen muß nur die übliche radiale Dichtfläche aufweisen. Dies hat auch den Vorteil, daß die erfindungsgemäße Rohrverschraubung an bereits vorhandenen üblichen Anschlußstutzen anschraubbar ist und dabei die gleichen Vorteile entfaltet, die nachstehend noch näher erläutert werden. Ferner erfordern die zur Aufnahme der zusammenhängenden Dichtungsanordnung erforderlichen Ausnehmungen im Klemmring eine geringere Präzision als O-Ringe, was sich ebenfalls kostensenkend auswirkt. Die zusammenhängende Dichtungsanordnung ist unverlierbar mit dem Klemmring verbunden, da sie dessen Bund an drei Seiten umschließt. Weiterhin wird eine besonders gute, großflächige und unempfindliche Abdichtung geschaffen, denn zwischen allen dem Innern des Rohres und des Anschlußstutzens zugekehrten Flächen ist elastisches Dichtungsmaterial vorhanden. Es gibt keinerlei Toträume zwischen Rohr, Klemmring und Anschlußstutzen, in die das die Rohrleitung durchströmende Medium eindringen könnte. Demzufolge können sich auch keine Keime festsetzen und das System ist leicht sterilisierbar. Durch den zwischen dem Klemmring und der Überwurfmutter vorgesehenen Druckring und dessen spezielle Ausgestaltung wird ein Mitdrehen des Klemmringes und/oder der Rohrleitung beim Anziehen der Überwurfmutter ausgeschlossen. Dies hat vor allem den Vorteil, daß sich beim Anziehen der Überwurfmutter der Klemmring weder gegenüber dem Anschlußstutzen noch gegenüber dem Rohr dreht, wodurch jede Drehbewegung zwischen der Dichtungsanordnung und den an sie angrenzenden Flächen von Rohr, Anschlußstutzen und Klemmring und damit auch jede Beschädigung der weichen Dichtungsanordnung vermieden wird. Außerdem wird auch ein Mitdrehen des Rohres vermieden, so daß dieses nicht gegen Drehung gehalten werden muß. Die Dichtungsanordnung aus elastomerem Material wird durch Verformung des Klemmringes beim Anziehen der Überwurfmutter komprimiert, wobei sie jedoch vom Klemmring, dem Rohr und dem Anschlußstutzen so umschlossen ist, daß sie weder in radialer Richtung noch in axialer Richtung nach außen treten kann. Hierdurch wird eine zuverlässige Abdichtung selbst bei Rohren mit Oberflächenfehlern und Beschädigungen erzielt.

Vorteilhafte Ausgestaltungen sind in den Unteransprüchen gekennzeichnet.

Die Erfindung ist in folgendem, anhand eines in der Zeichnung dargestellten Ausführungsbeispieles näher erläutert. Es zeigen:
- Figur 1: einen Axialschnitt der Rohrverschraubung, in der oberen Hälfte vor dem Anziehen der Überwurfmutter und in der unteren Hälfte nach dem Anziehen derselben,
- Figur 2: einen Teilaxialschnitt vor dem Anziehen der Überwurfmutter in einem größeren Maßstab,
- Figur 3: einen Teilaxialschnitt nach dem Anziehen der Überwurfmutter in einem größeren Maßstab.

Der Anschlußstutzen 1 ist mit einem Außengewinde 2 versehen, auf welches die Überwurfmutter 3 aufschraubbar ist. Die Überwurfmutter 3 weist an ihrem dem Anschlußstutzen 1 abgewandten Ende einen nach innen gerichteten Bund 4 mit einer radial verlaufenden Stützfläche 4a auf. Der Anschlußstutzen 1 ist mit einer radial verlaufenden Stutzendichtfläche 5 versehen.

Ferner ist ein Klemmring 6 vorgesehen, der auf das anzuschließende Rohr 7, welches insbesondere aus Metall besteht, aufschiebbar ist. Der Klemmring 6 weist an seinem ersten Ende 6a einen nach innen gerichteten Bund 8 auf, der die Rohrstirnfläche 7a übergreift. Ferner ist der Klemmring 6 an seinem ersten Ende 6a mit einer radial verlaufenden Klemmringdichtfläche 9 versehen. Das zweite Ende 6b des Klemmringes 6 weist eine geringere Wanddicke auf als das erste Ende 6a und es ist außerdem mit mehreren der Rohrmantelfläche 7b zugekehrten Klemmkanten 23 versehen.

In der Stirnseite des ersten Endes 6a des Klemmringes 6 ist radial innerhalb der Klemmringdichtfläche 9 in einem Bereich, welcher der Stutzendichtfläche 5 gegenübersteht, eine ringförmige Vertiefung für eine erste elastische Dichtung 11 vorgesehen. Diese ringförmige Vertiefung erstreckt sich vom Innenumfang 8a des Bundes 8 radial nach außen und endet mit Abstand vom Außenumfang 6c des Klemmringes, so daß an dem Klemmring 6 ein Dichtrand 12 verbleibt, der stirnseitig die Klemmringdichtfläche 9 trägt. Der Dichtrand 12 umschließt die erste Dichtung 11. Der Klemmring 6 ist ferner an seinem Innenumfang mit einer Ringnut 13 versehen, in welcher eine zweite elastische Dichtung 14 angeordnet ist, welche an der Rohrmantelfläche 7 b anliegt. Der ganze zwischen den beiden Dichtungen 11, 14 liegende Bereich des Bundes 8 und der Klemmringinnenseite 6d ist mit einer elastischen Dichtungsschicht 15 ausgekleidet, die mit den beiden Dichtungen 11, 14 eine menhängende, aus einem Elastomer bestehende Dichtungsanordnung 16 bildet. Diese Dichtungsanordnung 16 kann zweckmäßigerweise als Ganzes an den Klemmring 6 angespritzt oder anvulkanisiert sein. Aufgrund dieser Tatsache und weil die Dichtungsanordnung 16 auch den Bund 8 umschließt und in der Nut 13 verankert ist, ist sie unverlierbar mit dem Klemmring 6 verbunden.

Um die Verankerung der Dichtungsanordnung noch zu verbessern und auch genügend Raum zu schaffen, in den beim Anziehen der Überwurfmutter das Material der Dichtungsanordnung verdrängt und komprimiert werden kann, weist die Vertiefung 10 im Bereich der ersten Dichtung 11 eine größere axiale Tiefe auf als im Bereich des Bundes 8 des Klemmringes.

Vorzugsweise ist die Wanddicke des Klemmringes 6 in einem Bereich zwischen der zweiten Dichtung 14 und seinem Bund 8 durch eine in den Außenumfang 6c des Klemmringes eingestochene V-förmige Nut 17 geschwächt. Hierdurch verformt sich der Klemmring 6 im Bereich der Nut 17 beim Anziehen der Überwurfmutter 3 radial nach innen, so daß in diesem Bereich die Dichtungsschicht 15 besonders gut an die Rohrmantelfläche 7b angedrückt wird.

Um ein Mitdrehen des Klemmringes 6 beim Anziehen der Überwurfmutter 3 zu verhindern, ist zwischen dem Klemmring 6 und dem Bund 4 der Überwurfmutter 3 ein Druckring 18 angeordnet. Dieser Druckring 18 weist einen Innenkonus 19 auf, der auf das zweite Ende 6b des Klemmringes 6 einwirkt. Der Druckring 18 ist ferner mit einem radial verlaufenden Ringabsatz 20 versehen, der sich an der Stützfläche 4a des Bundes 4 abstützt. Hierdurch sind von der Geometrie her gleiche Abstützverhältnisse mit radial verlaufenden Flächen zwischen Anschlußstutzen 1 und Klemmring 6 einerseits sowie zwischen Druckring 18 und dem Bund 4 der Überwurfmutter 3 andererseits geschaffen. Da zwischen der Stutzendichtfläche 5 und dem Klemmring 6 infolge der elastischen Dichtungsanordnung 16 ohnehin eine höhere Reibung vorhanden ist, wird sich der Klemmring 6 beim Anziehen der Überwurfmutter 3 nicht mitdrehen. Demgegenüber ist die rein metallische Reibung zwischen dem Ringabsatz 20 und der Stützfläche 4a geringer, so daß sich die Überwurfmutter 3 gegenüber dem Druckring 18 drehen kann, der seinerseits durch die hohe Flächenpressung zwischen seinem Innenkonus 19 und dem zweiten Ende 6b des Klemmringes 6 gegen Drehung gehalten ist. Durch gezieltes Beeinflussen des Reibungskoeffizienten z.B. mittels Schmierung, Materialpaarung und/oder Rauhigkeit kann man außerdem noch zusätzlich sicherstellen, daß sich die Überwurfmutter 3 dreht, ohne den Druckring 18 mitzunehmen.

Damit der Druckring 18 mit der Überwurfmutter 3 eine Montageeinheit bildet und unverlierbar mit der Überwurfmutter verbunden ist, weist der Druckring 18 in zweckmäßiger Ausgestaltung im Anschluß an den Ringabsatz 20 einen Hals 21 auf, der sich durch die Bohrung 4b des Bundes 4 hindurch erstreckt und an seinem äußeren Ende einen radial nach außen gerichteten Kragen 22 aufweist, dessen Durchmesser etwas größer ist als der der Bohrung 4b. Der Kragen 22 verjüngt sich zum freien Ende hin. Bei der Vormontage des Druckringes 18 wird dieser von dem weiteren Ende der Überwurfmutter 3 her in diese eingeschoben, wobei der Kragen 22 beim Hindurchschieben durch die Bohrung 4b elastisch radial nach innen verformt wird. Wenn der Kragen 22 vollständig durch die Bohrung 4b hindurchgetreten ist, weitet sich der Hals 21 wieder elastisch radial nach außen auf und der im Durchmesser gegenüber der Bohrung 4b größere Kragen 22 verhindert ein Herausfallen des Druckringes 18 aus der Überwurfmutter 3.

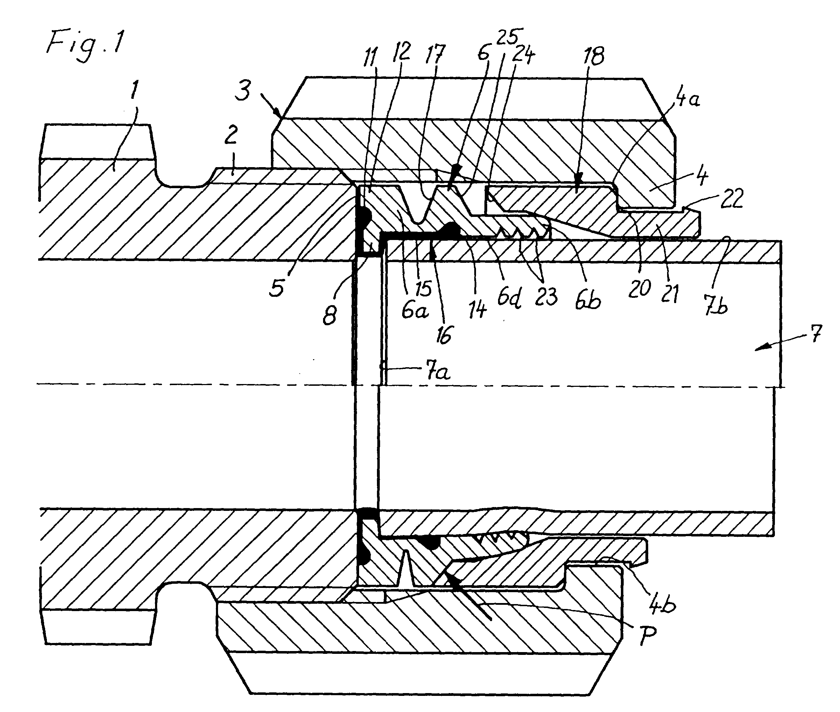

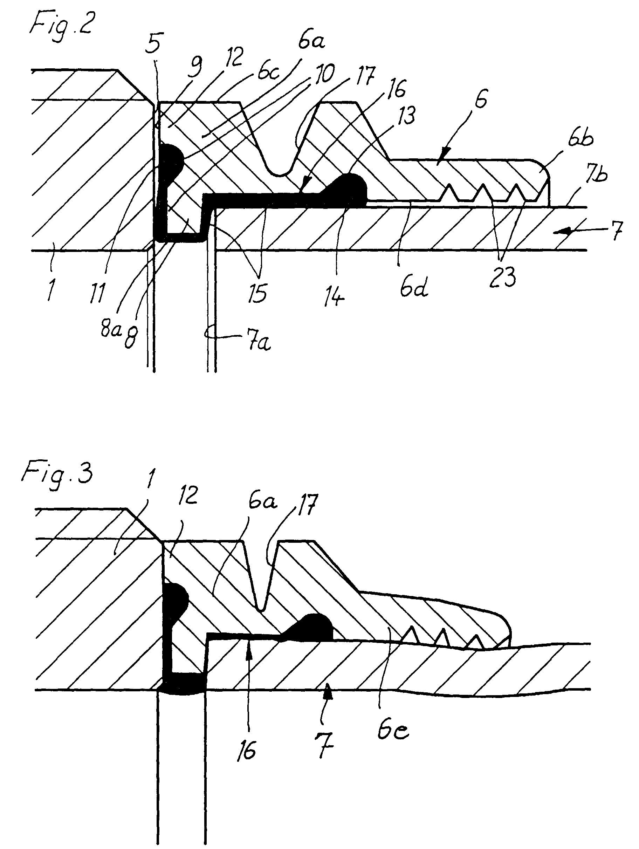

Bei der Montage, die bei der erfindungsgemäßen Rohrverschraubung rein radial ohne Axialverschiebung des Rohres 7 erfolgen kann, wird zunächst die Überwurfmutter 3 mit dem Druckring 18 und dann der Klemmring 6 auf das Rohr aufgeschoben. Nach lockerem Aufschrauben der Überwurfmutter 3 auf das Gewinde des Anschlußstutzens 1 nehmen die Teile der Rohrverschraubung zunächst die in Figur 1 oben dargestellte Stellung ein. Beim weiteren Anziehen der Überwurfmutter 3 wird der Druckring 18 gemäß Figur 1 nach links verschoben und drückt mit seinem Innenkonus 19 auf das zweite Ende 6b des Klemmringes 6. Hierdurch wird der Klemmring 6 nach links verschoben, wobei der an der Stutzendichtfläche 5 anliegende Teil der Dichtungsanordnung 16 verformt und teilweise radial nach innen und radial nach außen verdrängt wird. Da jedoch der Dichtungsrand 12 mit seiner Klemmringdichtfläche 9 an der Stutzendichtfläche 5 zur Anlage kommt, wird die Kompression des zwischen der Stutzendichtfläche 5 und dem Klemmring 6 liegenden Teiles der Dichtungsanordnung 16 begrenzt und außerdem verhindert der die Dichtung 11 umschließende Dichtrand 12 ein radiales Austreten von Dichtungsmaterial, da seine Klemmringdichtfläche 9 plan an der Stutzendichtfläche 5 anliegt. Durch den Innenkonus 19 wird ferner das zweite Ende 6b nach innen verformt, wobei die Klemmkanten 23 in die Rohrmantelfläche 7b eingepreßt werden und auch die Rohrwandung etwas nach innen verformt wird. Hierdurch wird das Rohr 7 sicher gegen Herausdrücken oder Herausziehen gehalten. Beim weiteren Anziehen der Überwurfmutter 3 legt sich auch die konische Stirnseite 24 des Druckringes 18 an die konische Schulter 25 des Klemmringes 6, wodurch eine Kraft in Richtung P auf den Klemmring 6 ausgeübt wird, die im Bereich der Nut 17 eine Verformung der Klemmringwandung radial nach innen bewirkt. Außerdem bewirkt die Stauchung des Klemmringes, daß die hohe Stirnfläche 7a axial gegen den Bund 8 verschoben wird und hierbei die Dichtungsschicht 15 zusammendrückt. Nach dem vollständigen Anziehen der Überwurfmutter 3 nehmen die Teile der Rohrverschraubung die in Figur 1 unten und Figur 3 dargestellte Stellung ein. Das Material der Dichtungsanordnung füllt alle vom Rohr-bzw. Stutzeninneren her zugänglichen Räume zwischen Stutzenstirnfläche 5, Rohrstirnfläche 7a und auch Rohrmantelfläche 7b vollständig aus. Es ist also kein Totraum vorhanden, so daß in der Nahrungsmittel-, Getränke- und pharmazeutischen Idustrie sowie in der Biotechnologie, wo hohe Reinheit und auch Sterilisation gefordert werden, sich keine Rückstände festsetzen können.

Der Dichtrand 12 verhindert durch seine Anlage an der Stutzendichtfläche 5 jeglichen Kaltfluß von Dichtungsmaterial radial nach außen und der an die Ringnut 13 angrenzende Teil 6e des Klemmringes 6 wird beim Anziehen der Überwurfmutter 3 fest an die Rohrmantelfläche 7b angepreßt und verhindert somit auch einen Kaltfluß von Dichtungsmaterial in axialer Richtung. Die Stützkraft unter der Nut 17 wird durch Komprimieren des Elastomeres der Dichtungsschicht 15 auf eine größere Fläche verteilt, was sich bei starken Vibrationen erfahrungsgemäß vorteilhaft auswirkt. Insgesamt bewirkt die elastische Dichtungsanordnung 16 erhöhte Sicherheit bei Rohren mit Oberflächenfehlern oder Beschädigungen und macht die Rohrverschraubung auch bei häufigen Demontagen des Anschlusses empfindlicher. Der Druckring 18 verhindert das Mitdrehen des Klemmringes 6, wodurch die Dichtungsanordnung geschont wird und auch das Mitdrehen des Rohres, so daß beim Anziehen der Überwurfmutter 3 weniger Montagespannungen entstehen und auch weniger Ausrichtarbeiten erforderlich sind.

Dank dieser Eigenschaften des Druckringes könnte dieser auch bei vorbekannten Rohrverschraubungen in Stoßausführung mit Vorteil eingesetzt werden, die keine zusätzliche elastische Dichtungsanordnung aufweisen.

## Patentansprüche

1. Rohrverschraubung in Stoßausführung, mit einem eine radial verlaufende Dichtfläche aufweisenden Anschlußstutzen, einer darauf aufschraubbaren Überwurfmutter, und mit einem Klemmring, der an seinem ersten Ende einen die Rohrstirnfläche übergreifenden Bund und eine der Stutzendichtfläche zugekehrte radiale Klemmringdichtfläche aufweist und dessen zweites, eine geringere Wanddicke aufweisendes Ende unter Wirkung der Überwurfmutter an das Rohr anpreßbar ist, wobei zwischen den beiden radialen Dichtflächen eine erste elastische Dichtung aus einem Elastomer und in einer inneren Ringnut des Klemmringes eine an der Rohrmantelfläche anliegende zweite elastische Dichtung aus einem Elastomer vorgesehen ist, **dadurch gekennzeichnet,** daß in der Stirnseite des ersten Klemmringendes (6a) radial innerhalb der Klemmringdichtfläche (9) für die erste elastische Dichtung (11) eine ringförmige Vertiefung (10) vorgesehen ist, die sich vom Innenumfang (8a) des Bundes (8) radial nach außen erstreckt und unter Belassung eines, die erste Dichtung (11) umschließenden, ringförmigen Dichtrandes (12) mit Abstand vom Außenumfang (6c) des Klemmringes (6) endet, daß der ganze, zwischen beiden Dichtungen (11, 14) liegende Bereich des Bundes (8) und der Klemmringinnenseite (6d) mit einer elastischen Dichtungsschicht (15) ausgekleidet ist, die mit den beiden Dichtungen (11, 14) eine zusammenhängende, einstückige tungsanordnung (16) bildet, und daß zwischen dem Klemmring (6) und einem an dem dem Anschlußstutzen (1) abgewandten Ende der Überwurfmutter (3) vorgesehenen, radial nach innen gerichteten Bund (4) ein Druckring (18) mit einem auf das zweite Ende (6b) des Klemmringes (6) einwirkenden Innenkonus (19) und einem am Bund (4) der Überwurfmutter (3) anliegenden, radialen Ringabsatz (20) angeordnet ist.

2. Rohrverschraubung nach Anspruch 1, **dadurch gekennzeichnet,** daß die Vertiefung (10) im Bereich der ersten Dichtung (11) eine größere axiale Tiefe aufweist, als im Bereich des Bundes (8) des Klemmringes (6).

3. Rohrverschraubung nach Anspruch 1 oder 2, **dadurch gekennzeichnet,** daß die Dichtungsanordnung (16) an den Klemmring (6) angespritzt ist.

4. Rohrverschraubung nach Anspruch 1 oder 2, **dadurch gekennzeichnet,** daß die Dichtungsanordnung (16) an den Klemmring (6) anvulkanisiert ist.

5. Rohrverschraubung nach einem der Ansprüche 1 bis 4, **dadurch gekennzeichnet,** daß die Wanddicke des Klemmringes (6) in einem Bereich zwischen der zweiten Dichtung (14) und seinem Bund (8) durch eine in den Außenumfang des Klemmringes (6) eingearbeitete Nut (17) geschwächt ist.

6. Rohrverschraubung nach einem der Ansprüche 1 bis 5, **dadurch gekennzeichnet,** daß der Druckring (18) im Anschluß an den Ringabsatz (20) einen Hals (21) aufweist, der sich durch die Bohrung (4b) des Bundes (4) der Überwurfmutter (3) hindurch erstreckt und an seinem äußeren Ende einen radial nach außen gerichteten Kragen (21) aufweist, dessen Außendurchmesser etwas größer ist als der der Bohrung (4b).

## Claims

1. A butt type screw pipe coupling, with a connector union having a radially extending sealing surface, a back nut which can be screwed thereon, and a clamping ring which has at its first end a flange engaging over the end surface of the pipe and a radial clamping ring sealing surface facing the union sealing surface and whose second end having a smaller wall thickness can be compressed on to the pipe under the action of the back nut, wherein a first elastic seal of an elastomer is provided between the two radial sealing surfaces and a second elastic seal of an elastomer is provided in an internal annular groove of the clamping ring, bearing on the outer surface of the pipe, characterized in that an annular recess (10) for the first elastic seal (11) is provided in the end face of the first clamping ring end (6a) radially within the clamping ring sealing surface (9), extending radially outwards from the inner periphery (8a) of the flange (8) and terminating at a distance from the outer periphery (6c) of the clamping ring (6) so as to leave an annular sealing margin (12) surrounding the first seal (11), in that the whole region of the flange (8) and the inside of the clamping ring (6d) lying between the two seals (11, 14) is clad by an elastic sealing layer (15), which forms a connected, one-piece sealing element (16) together with the two seals (11, 14), and in that a compression ring (18) is provided between the clamping ring (6) and a flange (4) provided on the end of the back nut (3) remote from the connector union (1) and directed radially inwards, the compression ring having an internal cone (19) acting on the second end (6b) of the clamping ring (6) and a radial annular shoulder bearing on the flange (4) of the back nut (3).

2. A screw pipe coupling according to claim 1, characterized in that the recess (10) has a greater axial depth in the region of the first seal (11) than in the region of the flange (8) of the clamping ring (6).

3. A screw pipe coupling according to claim 1 or 2, characterized in that the sealing element (16) is extruded on to the clamping ring (6).

4. A screw pipe coupling according to claim 1 or 2, characterized in that the sealing element (16) is vulcanised on to the clamping ring (6).

5. A screw pipe coupling according to any of claims 1 to 4, characterized in that the wall thickness of the clamping ring (6) is weakened in a region between the second seal (14) and its flange (8) by a groove (17) formed in the outer periphery of the clamping ring (6).

6. A screw pipe coupling according to any of claims 1 to 5, characterized in that the compression ring (18) has a neck (21) adjoining the annular shoulder (20), which neck extends through the bore (4b) of the flange (4) of the back nut (3) and has at its outer end an outwardly directed collar (21) whose outer diameter is somewhat greater than that of the bore (4b).

## Revendications

1. Raccord vissé pour tuyau à pleine face, avec une tubulure de raccordement présentant une surface d'étanchéité s'étendant radialement, un écrou raccord susceptible d'être vissé sur cette tubulure et avec une bague de serrage, qui présente, sur sa première extrémité, une collerette saisissant par le dessus la surface frontale du tube et une surface d'étanchéité d'anneau de serrage radiale, tournée vers la surface d'étanchéité de la tubulure, et dont la deuxième extrémité présentant une épaisseur de paroi moindre est susceptible d'être pressée sur le tube sous l'effet de l'écrou raccord, un premier joint d'étanchéité élastique en élastomère étant prévu entre les deux surfaces d'étanchéité radiales et un deuxième joint d'étanchéité appuyant sur la surface d'enveloppe du tube étant prévu dans une gorge annulaire intérieure de la bague d'étanchéité, caractérisé en ce que sur la face frontale de la première extrémité (6a) de bague d'étanchéité est prévue, radialement à l'intérieur de la surface d'étanchéité (9) de la bague d'étanchéité, une cavité (10) annulaire, destinée au premier joint d'étanchéité élastique (11) et s'étendant radialement vers l'extérieur depuis la périphérie intérieure (8a) de la collerette (8), et en laissant subsister une bordure d'étanchéité (12) annulaire, entourant le premier joint d'étanchéité (11), s'achevant à distance de la périphérie extérieure (6c) de la bague d'étanchéité (6), en ce que la totalité de la zone, située entre les deux joints d'étanchéité (11, 14), de la collerette (8) et la face intérieure (6d) de la bague de serrage, est revêtue d'une couche d'étanchéité (15) élastique qui constitue avec les deux joints d'étanchéité (11, 14) un dispositif d'étanchéité (16) monopièce, cohérent, et en ce que, entre la bague d'étanchéité (6) et une collerette (4) orientée radialement vers l'intérieur prévue sur l'extrémité, opposée à la tubulure de raccordement (1) de l'écrou raccord (3), est disposée une bague de pressage (18) ayant un cône intérieur (19) agissant sur la deuxième extrémité (6b) de la bague de serrage (6) et un décrochement annulaire (20) radial, appuyant sur la collerette (4) de l'écrou raccord (3).

2. Raccord vissé selon la revendication 1, caractérisé en ce que la cavité (10) présente dans la zone du premier joint d'étanchéité (11) une profondeur axiale supérieure à ce que l'on a dans la zone de la collerette (8) de la bague de serrage (6).

3. Raccord vissé selon la revendication 1 ou 2, caractérisé en ce que le dispositif d'étanchéité (16) est surmoulé par injection sur la bague de serrage (6).

4. Raccord vissé selon la revendication 1 ou 2, caractérisé en ce que le dispositif d'étanchéité (16) est vulcanisé sur la bague de serrage (6).

5. Raccord vissé selon l'une des revendications 1 à 4, caractérisé en ce que l'épaisseur de paroi de la bague de serrage (6), dans une zone située entre le deuxième joint d'étanchéité (14) et sa collerette (8), est affaiblie par une gorge (17) usinée dans la périphérie extérieure de la bague de serrage (6).

6. Raccord vissé selon l'une des revendications 1 à 5, caractérisé en ce que la bague de pressage (18) présente, suite au décrochement annulaire (20), un col (21) qui s'étend à travers le perçage (4b) de la collerette (4) de l'écrou raccord (3) et présente sur son extrémité extérieure une collerette (21), orientée radialement vers l'extérieur et dont le diamètre extérieur est quelque peu supérieur à celui du perçage (4b).
